# EUROPÄISCHE PATENTSCHRIFT

(11) **EP 2 112 040 B1**
(45) Veröffentlichungstag und Bekanntmachung des Hinweises auf die Patenterteilung: **15.06.2011**
(21) Anmeldenummer: 09155940.1
(22) Anmeldetag: 24.03.2009
(51) Int. Cl.: B60S 9/04, B60S 9/02, B62D 53/00, B62D 63/08

(54) **Stützfuß für Fahrzeugstützvorrichtung**
Support base for vehicle support device
Pied de soutien pour un dispositif de soutien de véhicule

(30) Priorität: 22.04.2008 DE 102008020176
(43) Veröffentlichungstag der Anmeldung: 28.10.2009
(73) Patentinhaber: SAF-HOLLAND GmbH, 63856 Bessenbach (DE)
(72) Erfinder: Christ, Armin, 63856, Bessenbach (DE); Koschinat, Hubert, 63768, Hösbach (DE)
(74) Vertreter: Bauer, Clemens

(56) Entgegenhaltungen:
- DE-A1- 4 426 361
- DE-U1-202007 007 990
- GB-A- 2 240 527

## Beschreibung

Die vorliegende Erfindung bezieht sich auf einen Stützfuß für eine Teleskop-Stützvorrichtung von Fahrzeugen, wie Sattelanhängern. Hierbei ist am unteren Ende eines ausfahrbaren Stützenteils, bzw. Stützelements, ein schwenkbarer Stützfuß vorgesehen, der ausgelegt ist, Bodenunebenheiten sowie einen Versatz der Position des Fahrzeugs auszugleichen.

Stützfüße zum Ausgleich eines Positionsversatzes sind hinlänglich aus dem Stand der Technik bekannt. Derartige Stützvorrichtungen sind an der vorderen Unterseite von beispielsweise Sattelanhängern paarweise angeordnet und kommen dann zum Einsatz, wenn der Sattelanhänger vom Sattelschlepper getrennt abgestellt wird. Bei längeren Standzeiten führen Undichtigkeiten im Brems- und Luftfedersystem dazu, dass sich der hintere Teil des Sattelaufliegers absenkt und infolge der arretierten Parkbremse der mechanischen Achsaufhängung sich das Fahrzeug bzw. der Sattelanhänger vorwärts bewegt. Bei den üblich eingestellten Senkwegen am Luftfederaggregat kann diese Verschiebung in Horizontalrichtung bis zu 150 mm ausmachen. In dieser Situation sind die Stützvorrichtungen, beziehungsweise deren Stützelemente und Stützrohre einer Biege- und Knickspannung ausgesetzt, die zu ihrer Beschädigung oder zum Versagen der Stützen führen können. Um diesen Positionsversatz ausgleichen zu können, wurden Stützfüße entwickelt, die schwenkbar angeordnet oder horizontal verschiebbar sind, um die Funktionalität der Stützen vollständig zu erhalten. So offenbart beispielsweise die DE 40 03 414 einen Stützfuß, welcher ein schwenkbar gelagertes Rollsegment und eine Fußplatte aufweist, wobei das Rollsegment auf der Fußplatte abrollbar ist. Hierbei verändert sich mit dem Positionsversatz die Länge der Stützwinden konstruktiv bedingt nicht, d.h. der Abstand zwischen Boden und Befestigungspunkt der Stützwinde bzw. des Stützfußes am Rahmen bleibt während des Positionsversatzes des Fahrzeugs unverändert. Problematisch bei derartigen Systemen ist jedoch, dass bei sich absenkendem Fahrzeughinterteil und konstanter Stützfußhöhe der Abstand des Fahrzeugvorderteils vom Boden und somit auch der des Verbindungsbereichs zum Zugfahrzeug (beispielsweise der Sattelkupplungszapfen) zunimmt. Sollte dann das Fahrzeug von einer Zugmaschine mit derselben Kupplungshöhe, wie sie beim Entkuppeln eingestellt war, wieder aufgenommen werden, besteht die Gefahr, dass die Kupplungselemente beim Verbinden der Fahrzeuge beschädigt werden. Insbesondere besteht die Möglichkeit, dass der Sattelkupplungszapfen des Fahrzeugs gegenüber dem Sattelkupplungsschloss des Zugfahrzeugs zu hoch ist und der untere Rand des Sattelkupplungszapfens den Haken des Sattelkupplungsschlosses beim Einfahren zerstört.

Die DE 44 26 361 A1 bezieht sich auf eine höhenverstellbare Stütze für Sattelanhänger, wobei am unteren Bereich des ausfahrbaren Stützenteils eine Bewegungs- und Tragvorrichtung für eine Fußplatte, auf der sich mindestens ein Rollelement abwälzt.

Die DE 20 2007 007 990 U1 offenbart ein Radsegment zur schwenkbaren Anbringung einer Fußplatte an eine Stützwinde, wobei das Radsegment ein teilzylindrisches Mantelelement mit einer auf seiner Unterseite gewölbten Abrollfläche und zwei radial auf dem Mantelelement stehende Seitenwände aufweist, in deren oberen Abschnitt jeweils ein Anschlag ausgebildet ist.

Es ist somit Aufgabe der vorliegenden Erfindung, einen Stützfuß für eine Teleskop-Stützvorrichtung von Fahrzeugen, wie Sattelanhängern, vorzusehen, mittels welchem die Gefahr der Zerstörung der Verbindungselemente zwischen Zugfahrzeug und angehängtem Fahrzeug verringert wird. Diese Aufgabe wird durch einen Stützfuß für eine Teleskop-Stützvorrichtung von Fahrzeugen, wie Sattelanhängern, mit dem Merkmal des Anspruchs 1 gelöst. Bevorzugte Ausführungsformen ergeben sich aus den abhängigen Ansprüchen.

Erfindungsgemäß ist ein Stützfuß für eine Teleskop-Stützvorrichtung von Fahrzeugen, wie Sattelanhängern, vorgesehen, umfassend ein Fußelement mit einem Auflagebereich zur Auflage auf einem Untergrund und ein Ausgleichselement zur Aufnahme eines Stützelements und zum Ausgleich eines Positionsversatzes desselben, indem das Ausgleichselement in bezug auf das Fußelement zwischen einer ersten und einer zweiten Position verlagerbar ist, wobei das Ausgleichselement Ober eine Schwenkachse schwenkbar gelagert ist und auf einem Abrollbereich des Fußelements abrollbar ist, wobei die Abrollfläche des Ausgleichselements entlang einer Schwenkebene gekrümmt ist, und wobei die Abrollfläche des Ausgleichselements entlang der Schwenkebene zumindest bereichsweise mit einem nicht konstanten Krümmungsradius gekrümmt ist. Zweckmäßigerweise ist das Stützelement an dem Ausgleichselement angeordnet. Das Stützelement ist beispielsweise als Stützrohr einer Teleskopverbindung ausgebildet und dient zur Übertragung von aus dem Rahmen eines Fahrzeugs in das Stützelement eingeleiteten Kräften auf den Stützfuß. Das Stützelement ist vorteilhafterweise dreh- bzw. schwenkbar, insbesondere entlang der Schwenkebene, mit dem Ausgleichselement verbunden. Die Verbindung kann hierbei derart gestaltet sein, dass das Ausgleichselement vom Stützelement lösbar ist. Mittels des Fußelements und des Ausgleichselements ist es möglich, einen Positionsversatz des Stützelements in Bezug auf das Fußelement auszugleichen bzw. zu kompensieren. Der Begriff Positionsversatz kann hierbei insbesondere in Form der Veränderung der Position in linearer Richtung (beispielsweise horizontal bzw. in Längsrichtung des Fußelements) verstanden werden. Ebenfalls kann ein Winkelversatz des Stützelements in Bezug auf das Fußelement ausgeglichen bzw. kompensiert werden. Dieser Winkelversatz kann insbesondere in Fahrzeuglängsrichtung bzw. im Wesentlichen parallel zur Schwenkebene aufgrund der gekrümmten Abrollfläche des Ausgleichselements erfolgen. In einer besonders bevorzugten Ausführungsform kann ebenfalls ein Winkelversatz in Fahrzeugquer- bzw. Breitenrichtung aufgrund einer Krümmung der Abrollfläche des Ausgleichselements entlang einer Radialebene ausgeglichen bzw. kompensiert werden. Das Ausgleichselement und das Fußelement können in Bezug aufeinander zwischen einer ersten Position und einer zweiten Position verlagert werden. Die erste Position kann insbesondere eine Ursprungsposition bzw. Nullstellung sein, in welcher das Ausgleichselement in Bezug auf das Fußelement im Wesentlichen mittig angeordnet ist. Ausgehend von der ersten bzw. Ursprungsposition kann das Ausgleichselement in Bezug auf das Fußelement in Richtung einer zweiten Position verlagert bzw. verschwenkt werden. Die zweite Position ist infolgedessen insbesondere eine ausgelenkte Position, wobei die Verlagerung des Ausgleichselements besonders vorteilhafterweise - ausgehend von der Ursprungsposition - sowohl nach vorne (vordere Position) als auch nach hinten (hintere Position) erfolgen kann (gesehen mit Bezug auf das Fußelement). Somit liegt die erste Position insbesondere zwischen der vorderen und hinteren Position. Aufgrund der Tatsache, dass das Ausgleichselement auf dem Fußelement abrollbar ist, liegen die erste Position und die zweite Position vorzugsweise im Wesentlichen entlang einer Geraden bzw. Linie bzw. Achse bzw. auf einer Schwenkebene. Zweckmäßigerweise weist das Fußelement einen Auflagebereich zur Auflage auf einem Untergrund auf. Dieser ist vorteilhafterweise im Wesentlichen plattenförmig ausgebildet und kann eine im Wesentlichen rechteckige Form aufweisen mit einer Längserstreckung, die größer als dessen Breitenerstreckung ist. Das Ausgleichselement ist zweckmäßigerweise schwenkbar gelagert, wobei der Begriff "schwenkbar gelagert" dahingehend zu interpretieren ist, dass das Ausgleichselement in Bezug auf das Fußelement schwenkbar verlagerbar ist. Hierfür weist das Ausgleichselement eine Schwenkachse auf, die zweckmäßigerweise im Wesentlichen mit der Lagerachse des Stützelements übereinstimmt. Die Schwenkachse steht zweckmäßigerweise im Wesentlichen senkrecht zur Längserstreckung bzw. Längsachse des Fußelements, respektive im Wesentlichen senkrecht zu einer Ebene, in welcher die Längserstreckung bzw. Längsachse des Fußelements liegt. Das Ausgleichselement ist auf einem Abrollbereich des Fußelements abrollbar, welcher vorzugsweise im Wesentlichen dem Auflagebereich des Fußelements gegenüberliegend angeordnet ist. Um ein Abrollen des Ausgleichselements zu gewährleisten, weist das Ausgleichselement eine Abrollfläche auf, die entlang einer Schwenkebene gekrümmt ist. Die Schwenkebene ist hierbei im Wesentlichen parallel zur Längsachse des Fußelements bzw. im Wesentlichen rechtwinklig zur Schwenkachse des Ausgleichselements. Die Krümmung der Abrollfläche kann beliebig gestaltet sein. Es ist jedoch besonders vorteilhaft, wenn die Krümmung der Abrollfläche kurven- oder kreisförmig, d.h. nicht eckig, ist. Durch die Krümmung des Ausgleichselements entlang der Schwenkebene ist es somit möglich, dass das Ausgleichselement auf dem Fußelement entlang dessen Längsachse abrollen kann, so dass ein Positionsversatz des Fahrzeugs in Längsrichtung kompensiert werden kann. Besonders vorteilhaft ist die Abrollfläche des Ausgleichselements entlang der Schwenkebene zumindest bereichsweise mit einem nicht konstanten Krümmungsradius gekrümmt. In anderen Worten weist die Schnittkurve bzw. -linie zwischen Schwenkebene und Abrollfläche des Ausgleichselements einen Krümmungsradius auf, der zumindest bereichsweise verschieden bzw. unterschiedlich bzw. nicht konstant ausgebildet ist. Somit ist der Krümmungsradius der Abrollfläche des Ausgleichselements innerhalb einer bestimmten Schwenkebene entlang der Abrollfläche variabel bzw. veränderlich bzw. nicht konstant ausgebildet. Hierdurch wird gewährleistet, dass bei einem Abrollen bzw. Verlagern des Ausgleichselements in Bezug auf das Fußelement der Abstand zwischen Schwenkachse und Fußelement (insbesondere dessen Abrollbereich) veränderlich ist, bzw. sich verändert. Hierdurch wird erreicht, dass bei einem Positionsversatz des Fahrzeugs sich die absolute Länge des Stützfußes verändert und somit die Höhe des Kupplungs- bzw. Verbindungsbereichs des Fahrzeugs in Abhängigkeit von der Höhenveränderung des Federsystems (hier insbesondere Luftfeder) konstant, zumindest jedoch nahezu konstant, gehalten werden kann.

Vorzugsweise weist die Abrollfläche des Ausgleichselements entlang der Schwenkebene in zumindest einem Randbereich der Abrollfläche einen kleineren Abstand zur Schwenkachse auf als in deren Mittelbereich. Der Randbereich der Abrollfläche des Ausgleichselements muss hierbei jedoch nicht unbedingt der äußerste Rand sein, sondern kann auch dem Mittelbereich der Abrollfläche des Ausgleichselements direkt benachbart angeordnet sein und somit vom absoluten Rand der Abrollfläche beabstandet sein. Bei einem Positionsversatz des Fahrzeugs verringert sich somit die Höhe des Stützfußes bei einem Abrollen vom Mittelbereich zum Randbereich, so dass bei einem sich absenkenden Luftfederaggregat die Höhe des Kupplungsbereichs des Fahrzeugs vorteilhafterweise konstant gehalten werden kann.

Besonders vorteilhafterweise weist die Abrollfläche des Ausgleichselements entlang der Schwenkebene einen von zumindest einem Randbereich der Abrollfläche zu deren Mittelbereich kleiner werdenden Krümmungsradius auf. Es versteht sich, dass besonders zweckmäßigerweise die Abrollfläche des Ausgleichselements entlang der Schwenkebene einen von zwei im Wesentlichen gegenüberliegenden Randbereichen der Abrollfläche zu deren Mittelbereich kleiner werdenden Krümmungsradius aufweisen kann. Der Mittelbereich liegt hierbei im Wesentlichen zwischen den beiden Randbereichen. Der Mittelbereich der Abrollfläche des Ausgleichselements ist vorzugsweise insbesondere derjenige Bereich, welcher in der ersten bzw. Ursprungsposition des Ausgleichselements auf dem Abrollbereich des Fußelements aufliegt. Entsprechend sind die Randbereiche der Abrollfläche von dem Mittelbereich in Umfangsrichtung benachbart oder beabstandet, wobei diese nicht zwingendermaßen den äußeren Rand der Abrollfläche bilden müssen. Bei einer Idealisierung der Abrollkurve (Schnittkurve der Abrollfläche mit der Schwenkebene) als Bogenabschnitt sind die Randbereiche die jeweiligen Endbereiche des Bogens. Besonders zweckmäßigerweise entsprechen jedoch die Randbereiche im Wesentlichen den Rändern der Abrollfläche des Ausgleichselements. Der Krümmungsradius der Schnittkurve der Abrollfläche mit der Schwenkebene nimmt somit ausgehend von den Randbereichen zum Mittelbereich hin ab. In anderen Worten ist der Krümmungsradius der Abrollfläche in dessen Mittelbereich kleiner als in daneben liegenden Bereichen. Ferner in anderen Worten ist der (radiale) Abstand zwischen Schwenkachse und Abrollfläche in den Randbereichen kleiner als im Mittelbereich. Dies führt dazu, dass bei einer Verlagerung des Ausgleichselements von der ersten Position in Richtung der zweiten Position sich die Schwenkachse des Ausgleichselements dem Auflagebereich (in vertikaler Richtung) annähert. Somit entsteht bei einer Lageänderung bzw. einem Positionsversatz des Fahrzeugs in Längsrichtung aufgrund einer Absenkung im Brems- und Luftfedersystem ebenfalls eine Absenkung des Fahrzeugs im Bereich des Stützfußes bzw. der Stützwinde, so dass die horizontale Winkelstellung des Fahrzeugs im Wesentlichen konstant gehalten werden kann.

Weiterhin bevorzugt ist die Verringerung des Krümmungsradius der Abrollfläche des Ausgleichselements entlang der Schwenkebene zumindest von einem Randbereich der Abrollfläche zu deren Mittelbereich hin konstant. Es versteht sich, dass ähnlich wie oben die Verringerung des Krümmungsradius der Abrollfläche des Ausgleichselements entlang der Schwenkebene auch von beiden im Wesentlichen gegenüberliegenden Randbereichen zu dem Mittelbereich der Abrollfläche hin konstant sein kann, wobei der Randbereich nicht zwingendermaßen der äußerste Rand der Abrollfläche ist. In anderen Worten nimmt der Krümmungsradius der Abrollfläche zu deren Mittelbereich hin pro gleichbleibender Winkelmaßeinheit um einen konstanten Wert ab.

Alternativ ist die Verringerung des Krümmungsradius der Abrollfläche des Ausgleichselements entlang der Schwenkebene zumindest von einem Randbereich der Abrollfläche zu deren Mittelbereich hin zunehmend oder in einer alternativen Ausführungsform abnehmend. Eine Längenänderung des Stützfußes in Abhängigkeit von einem Versatz bzw. einer Verlagerung des Fahrzeugs ist somit nicht linear, sondern die Änderung der Krümmung pro gleichbleibender Winkelmaßeinheit über den Umfang kann bei Verlagerung bzw. einem Versatz des Fahrzeugs zunehmen, so dass bei einem Abrollen im Bereich des Mittelbereichs eine größere Höhenveränderung des Stützfußes erfolgt als in den Randbereichen. In einer alternativen Ausführungsform kann die Änderung der Krümmung pro gleichbleibender Winkelmaßeinheit über den Umfang abnehmen, so dass die Längs- oder Höhenveränderungen des Stützfußes in den Randbereichen sehr viel größer ist als im Mittelbereich.

In einer bevorzugten Ausführungsform ist die Abrollfläche des Ausgleichselements entlang der Schwenkebene zu einer im Wesentlichen durch die Mitte der Abrollfläche laufenden Radialebene im Wesentlichen spiegelsymmetrisch. In anderen Worten ist die Schnittkurve der Abrollfläche des Ausgleichselements mit der Schwenkebene zu einer Achse bzw. Ebene symmetrisch, welche von der Schwenkachse des Ausgleichselements ausgehend durch den Mittelbereich der Abrollfläche des Ausgleichselements verläuft.

Zweckmäßigerweise ist die Abrollfläche des Ausgleichselements zumindest teilweise als Ausschnitt einer Zylindermantelfläche ausgebildet. Die Grundfläche des die Zylindermantelfläche definierenden Zylinders ist hierbei nicht kreisrund mit konstantem bzw. gleich bleibendem Radius ausgebildet, sondern weist eine sonstige gekrümmte Konfiguration auf.

Vorzugsweise ist die Abrollfläche des Ausgleichselements entlang einer Radialebene gekrümmt, wobei der Abrollbereich eine gekrümmte Oberflächenkonfiguration aufweist. Durch die Krümmung der Abrollfläche des Ausgleichselements entlang der Radialebene ist es möglich, dass ein Winkelversatz bzw. eine Neigung des Stützelements in Fahrzeugquerrichtung ermöglicht wird, so dass besonders vorteilhafterweise Bodenunebenheiten kompensiert werden können. Dies ist insbesondere zweckmäßig, da oftmals Abstellgelände uneben oder Straßenabschnitte gewölbt sind, so dass die Neigungen oder Unebenheiten nicht nur in Fahrzeuglängsrichtung, sondern in jeder Richtung, insbesondere der Breitenrichtung, auftreten können. Um zumindest eine Linienberührung zwischen der Abrollfläche des Ausgleichselements und dem Fußelement zu gewährleisten (wodurch die Stabilität und Festigkeit verbessert wird), weist der Abrollbereich eine gekrümmte Oberflächenkonfiguration auf. Hierbei weist der Abrollbereich des Fußelements insbesondere entlang einer Querebene eine Krümmung auf. Die Querebene steht im Wesentlichen senkrecht zur Längsachse des Fußelements, so dass die Querachse des Fußelements im Wesentlichen parallel zur Querebene liegt. Es wird somit ein Stützfuß vorgesehen, dessen Ausgleichselement eine Abrollfläche aufweist, die sowohl entlang der Schwenkebene als auch entlang der Radialebene eine Krümmung aufweist, so dass sich der Stützfuß auch seitlich geneigten Unebenheiten anpassen kann und somit eine vorteilhafte, gleichmäßige Kräfteverteilung in allen Bauteilen gewährleistet wird.

Vorzugsweise ist die gekrümmte Oberflächenkonfiguration des Abrollbereichs zumindest teilweise im Wesentlichen kongruent zur Krümmung der Abrollfläche des Ausgleichselements entlang einer Radialebene. Hierdurch wird eine besonders sichere Kraftübertragung vom Ausgleichselement in das Fußelement gewährleistet, da - unabhängig von der Schwenkposition des Ausgleichselements - im Wesentlichen eine Linienberührung zwischen Abrollbereich des Fußelements und Abrollfläche des Ausgleichselements gegeben ist.

Vorteilhafterweise ist die Abrollfläche des Ausgleichselements entlang einer Radialebene mit konstantem Krümmungsradius gekrümmt. Mit anderen Worten weist die Schnittlinie bzw. -kurve der Abrollfläche des Ausgleichselements mit einer Radialebene, auf welcher die Schwenkachse liegt, einen konstanten Krümmungsradius auf, so dass diese Schnittlinie im Wesentlichen kreisförmig ist. Hierdurch wird eine besonders gleichmäßige Winkelversatzkompensation des Stützfußes in Querrichtung ermöglicht. Die Abrollfläche des Ausgleichselements kann besonders vorteilhafterweise entlang einer Radialebene zu einer im Wesentlichen mittig angeordneten Mittelebene im Wesentlichen spiegelsymmentrisch sein. Es wird somit eine Abrollfläche bereitgestellt, deren Schnittlinie bzw. -kurve mit der Radialebene zu einer im Wesentlichen mittig angeordneten Mittelebene bzw. -achse im Wesentlichen spiegelsymmetrisch ist. Die Mittelebene ist hierbei im Wesentlichen parallel zur Schwenkebene, d.h. ist eine bestimmte Position der Schwenkebene. Die Mittelebene ist besonders vorteilhafterweise entlang der Schwenkachse des Ausgleichselements genau mittig angeordnet. Weiterhin vorteilhafterweise ist der Krümmungsradius der Abrollfläche des Ausgleichselements entlang der Schwenkebene und der Radialebene gleich. In anderen Worten nimmt der Krümmungsradius der Abrollfläche des Ausgleichselements entlang der Schwenkebene im gleichen Maße ab bzw. zu wie der Krümmungsradius der Abrollfläche des Ausgleichselements entlang der Radialebene. Der Krümmungsradius der Abrollfläche des Ausgleichselements kann jedoch auch entlang der Radialebene größer sein als der Krümmungsradius der Abrollfläche des Ausgleichselements an einem beliebigen Punkt entlang der Schwenkebene. Infolgedessen kann in einer speziellen Ausführungsform die Abrollfläche die Konfiguration eines Ausschnitts einer Mantelfläche einer Tonne aufweisen.

Zweckmäßigerweise weist die Abrollfläche des Ausgleichselements zumindest bereichsweise einen Rücksprung auf. Der Rücksprung ist besonders vorteilhafterweise im Bereich oder vorzugsweise mittig zur Mittelebene ausgebildet. Hierbei kann sich der Rücksprung im Wesentlichen umfänglich zumindest über einen Teil der Abrollfläche erstrecken. Es versteht sich, dass zusätzlich oder anstelle eines Rücksprungs ebenfalls eine Aussparung bzw. Durchbrechung der Mantelfläche des Ausgleichselements vorgesehen sein kann. Die zur Schwenkachse hin gerichtete Tiefe des Rücksprungs kann beliebig ausgestaltet sein. Es ist jedoch besonders vorteilhaft, wenn die zur Schwenkachse hin gerichtete Tiefe des Rücksprungs im Wesentlichen dem Außendurchmesser einer als Vorspanneinrichtung vorgesehenen Feder entspricht. Entsprechend ist es vorteilhaft, wenn die Querschnittskonfiguration des Rücksprungs im Wesentlichen der äußeren Querschnittskonfiguration der als Feder vorgesehenen Vorspanneinrichtung entspricht.

In einer bevorzugten Ausführungsform weist der Stützfuß eine Vorspanneinrichtung auf, um das Ausgleichselement in Bezug auf das Fußelement in die erste Position vorzuspannen. Hierdurch wird gewährleistet, dass beim Beabstanden des Stützelements vom Boden (d.h. beim Einfahren des Stützelements) das Ausgleichselement durch die Vorspanneinrichtung in die Grundstellung bzw. erste Position bzw. Ursprungsposition gebracht werden kann.

Zweckmäßigerweise ist die Vorspanneinrichtung aus zumindest einer Feder ausgebildet, welche zwischen dem Fußelement und dem Ausgleichselement verspannt ist. Die Feder ist insbesondere an dem Auflagebereich des Fußelements angeordnet. Es versteht sich, dass ebenfalls eine Vielzahl von Federn vorgesehen sein kann; so können beispielsweise zwei Federn vorgesehen sein, welche - in Längsrichtung bzw. Längserstreckung des Auflagebereichs gesehen-jeweils vorne und hinten am Auflagebereich angeordnet bzw. fixiert sind und entsprechend vorne und hinten an den Randbereichen des Ausgleichselements befestigt sind. Die Federn sind zweckmäßigerweise als Schraubenfedern ausgeführt und lösbar am Fußelement und Ausgleichselement angeordnet, um einen einfachen Austausch zu gewährleisten. Bei einer Verschwenkung des Ausgleichselements können die Federn somit entsprechend im Rücksprung zumindest teilweise aufgenommen werden.

Weiterhin bevorzugt weist das Fußelement zumindest einen Führungsbereich auf, der als sich vom Auflagebereich vorzugsweise im Wesentlichen senkrecht erstreckender Wandbereich ausgebildet ist. Der Führungsbereich kann somit als sich vom Auflagebereich weg erstreckender und entlang der Längsachse erstreckender Wandabschnitt ausgebildet sein. Bei Verwendung von lediglich einem Führungsbereich, ist dieser zweckmäßigerweise im Wesentlichen (in Querrichtung gesehen) mittig am Fußelement angeordnet und ragt somit besonders zweckmäßigerweise zumindest teilweise in den Rücksprung der Abrollfläche des Ausgleichselements hinein. Alternativ können jedoch beispielsweise zwei Führungsbereiche vorgesehen sein, die im Wesentlichen Seitenwände des Fußelements bilden und sich entlang der Längsachse des Fußelements im Wesentlichen senkrecht zum Auflagebereich von diesem weg erstrecken. Die Führungsbereiche dienen somit insbesondere einer Führung des Ausgleichselements in Querrichtung, da das Ausgleichselement im Wesentlichen zwischen den Führungsbereichen angeordnet ist.

Zweckmäßigerweise weist der Führungsbereich zumindest einen Führungsrücksprung oder eine Führungsaussparung auf, um Eingriffsmittel des Ausgleichselements zu führen. Der Führungsrücksprung oder die Führungsaussparung kann beispielsweise als Durchbruch oder Schlitz ausgebildet sein. Ebenfalls kann dieser auch lediglich als Vertiefung im Material ausgebildet sein, so dass eine Führung der Eingriffsmittel ermöglicht wird. Die Eingriffsmittel können als Bolzen, Stab, Zapfen oder Vorsprung beliebiger Querschnittskonfigurationen ausgebildet sein. So können die Eingriffsmittel einen runden oder eckigen Querschnitt aufweisen. Es versteht sich, dass die Eingriffsmittel einteilig ausgebildet sein können und sich im Wesentlichen über die gesamte Breite bzw. Quererstreckung des Fußelements (zumindest von der Führungsaussparung eines ersten Führungsbereichs bis zur Führungsaussparung eines gegenüberliegenden Führungsbereichs) erstrecken. Alternativ können die Eingriffsmittel auch mehrteilig ausgebildet sein und an (Seiten-) Wandabschnitten des Ausgleichselements angeordnet sein, von welchen diese sich in die Führungsaussparung bzw. den Führungsrücksprung hinein erstrecken. Zweckmäßigerweise sind die Eingriffsmittel lösbar mit dem Ausgleichselement verbunden, um somit eine leichte Austauschbarkeit zu gewährleisten. Die Eingriffsmittel stehen derart mit der Führungsaussparung oder dem Führungsrücksprung in Eingriff, dass diese darin mit Spiel geführt sind, wobei eine Führung des Ausgleichselements zwischen der ersten und der zweiten Position gewährleistet wird.

Vorteilhafterweise weist der Rücksprung oder die Führungsaussparung eine gekrümmte Konfiguration auf, wobei dessen bzw. deren mittlerer Bereich dem Auflagebereich am nahesten ist. Die gekrümmte Konfiguration der Führungsaussparung bzw. des Führungsrücksprungs kann beispielsweise in der Seitenansicht (im Wesentlichen parallel zur Querachse des Fußelements) V-förmig, rund oder eckig (i.e. polygon) sein. Aufgrund der gekrümmten Konfiguration ist der mittlere Bereich der Führungsaussparung bzw. des Führungsrücksprungs dem mittleren Bereich des Auflagebereichs zweckmäßigerweise am nahesten. Dieser mittlere Bereich entspricht somit der Stellung der Eingriffsmittel des Ausgleichselements in dessen erster Position. In anderen Worten sind die Spitzen von V-förmigen Führungsrücksprüngen oder Führungsaussparungen somit der tiefste Punkt und in der ersten Position des Ausgleichselements im Wesentlichen vertikal unterhalb der Schwenkachse des Ausgleichselements angeordnet.

Weitere Vorteile und Merkmale der vorliegenden Erfindung ergeben sich aus der nachfolgenden Beschreibung von bevorzugten Ausführungsformen mit Bezug auf die beigefügten Figuren, wobei einzelne Merkmale der Ausführungsformen zu neuen Ausführungsformen kombiniert werden können. Es zeigen:
Fig. 1 eine perspektivische Ansicht einer bevorzugten Ausführungsform des erfindungsgemäßen Stützfußes in der ersten Position.
Fig. 2 eine Frontalansicht einer bevorzugten Ausführungsform des erfindungsgemäßen Stützfußes in der ersten Position.
Fig. 3 eine perspektivische Ansicht einer weiteren bevorzugten Ausführungsform des erfindungsgemäßen Stützfußes in der ersten Position.
Fig. 4 eine perspektivische Ansicht der Ausführungsform gemäß Fig. 3 des erfindungsgemäßen Stützfußes in dessen zweiter Position.
Fig. 5 eine Frontalansicht der weiteren bevorzugten Ausführungsform gemäß Fig. 3 des erfindungsgemäßen Stützfußes in der ersten Position.
Fig. 6 eine Seitenansicht und eine Frontalansicht einer ersten bevorzugten Ausführungsform des erfindungsgemäßen Ausgleichselements.
Fig. 7 eine Seitenansicht und eine Frontalansicht der weiteren bevorzugten Ausführungsform des erfindungsgemäßen Ausgleichselements.

Die im Folgenden beschriebenen beispielhaften bevorzugten Ausführungsformen des erfindungsgemäßen Stützfußes stellen lediglich eine beispielhafte Beschreibung des Gegenstands der Erfindung dar, der nicht limitierend auf die dargestellten Merkmale beschränkt werden darf, wobei gleiche Elemente einzelner Ausführungsformen mit den gleichen Bezugszeichen versehen sind.

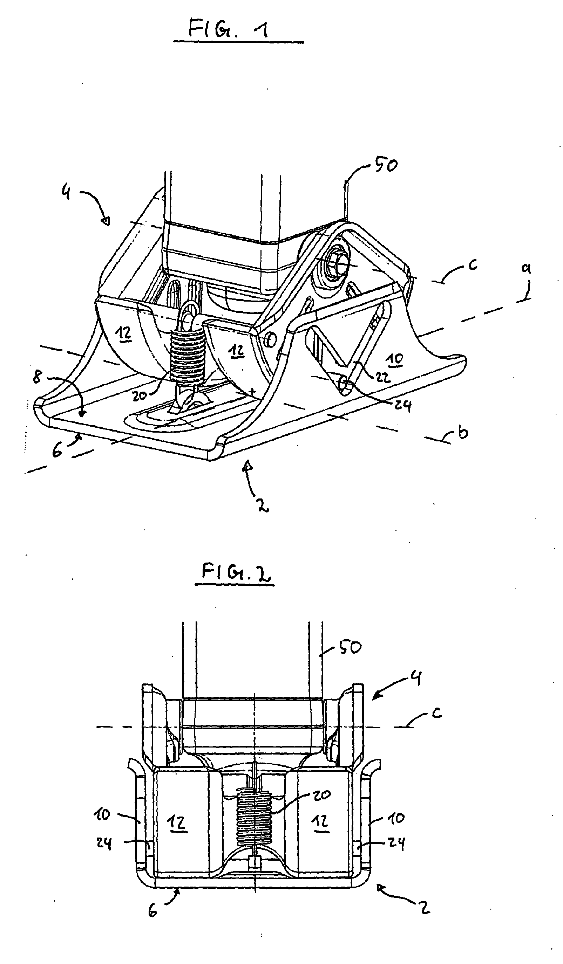

In den Fig. 1 und 2 ist eine perspektivische Ansicht sowie eine Frontalansicht einer beispielhaften, bevorzugten Ausführungsform des erfindungsgemäßen Stützfußes dargestellt. Der Stützfuß weist ein Fußelement 2 sowie ein Ausgleichselement 4 auf. An dem Ausgleichselement 4 ist schwenk- bzw. rotier- bzw. drehbar ein Stützelement 50 angeordnet, welches beispielsweise als Teleskop-Stützrohr ausgebildet sein kann und mit dem Rahmen des Fahrzeugs an dessen gegenüberliegender Seite verbunden ist.

Das Fußelement 2 ist als im Wesentlichen rechteckförmige Platte ausgebildet und weist einen Auflagebereich 6 auf, welcher auf dem Untergrund bzw. Boden aufliegt. An dem Auflagebereich 6 (insbesondere an dessen dem Boden abgewandter Seite) ist ein Abrollbereich 8 vorgesehen, auf welchem das Ausgleichselement 4 abrollbar ist. Darüber hinaus weist das Fußelement 2 an dessen Längskante jeweils einen Führungsbereich 10 auf, zwischen welchen das Ausgleichselement geführt ist. Das Fußelement 2 weist eine im Wesentlichen rechteckförmige Grundfläche auf, die durch den Auflagebereich 6 konstituiert bzw. aufgespannt wird. Entsprechend weist das Fußelement 2 bzw. dessen Auflagebereich 6 eine Längsachse a sowie eine Querachse b auf, wobei die Querachse b im Wesentlichen senkrecht zur Längsachse a steht. Die Längsachse a liegt hierbei im Wesentlichen parallel zu einer Ebene, in welcher das Ausgleichselement schwenken kann, d.h. der Schwenkebene x.

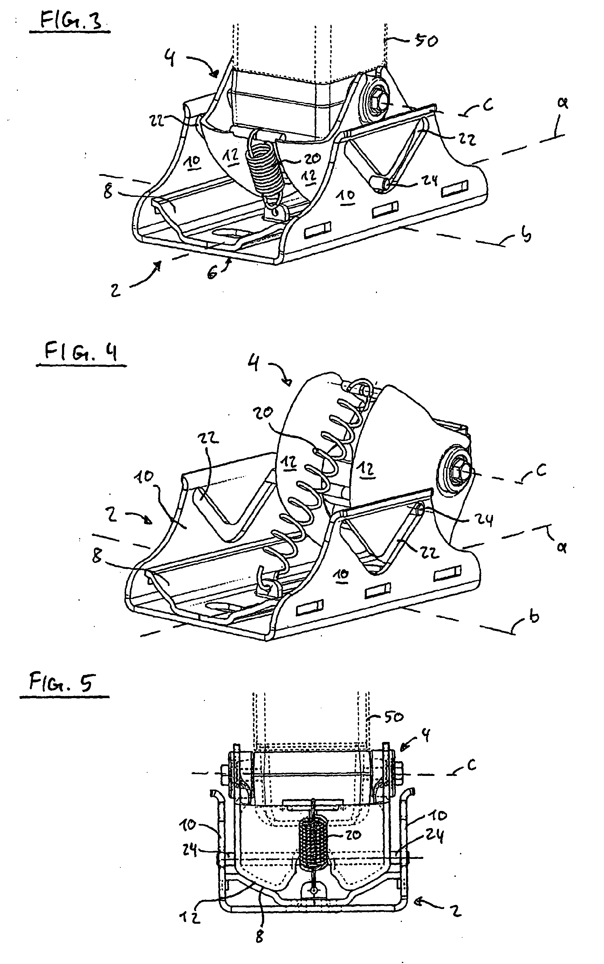

In der dargestellten Ausführungsform weist das Ausgleichselement 4 eine Lagereinrichtung bzw. einen Lagerbereich auf, über welchen das Ausgleichselement 4 mit dem Stützelement 50 derart verbunden ist, dass das Ausgleichselement 4 in Relation zum Stützelement 50 über eine Schwenkachse c dreh- bzw. schwenkbar ist. Darüber hinaus weist das Ausgleichselement 4 zumindest eine Abrollfläche 12 auf, die derart mit dem Abrollbereich des Fußelements 2 zusammenwirkt, dass das Ausgleichselement 4 auf dem Fußelement 2 abrollbar ist. Somit ist das Ausgleichselement 4 in Bezug auf das Fußelement 2 zwischen einer Ursprungsposition bzw. ersten Position (Fig. 1 bzw. Fig. 3) und einer ausgelenkten Position bzw. zweiten Position (Fig. 4) verlagerbar, indem das Ausgleichselement 4 über die Schwenkachse c schwenkbar gelagert ist und auf dem Abrollbereich 8 des Fußelements 2 abrollt.

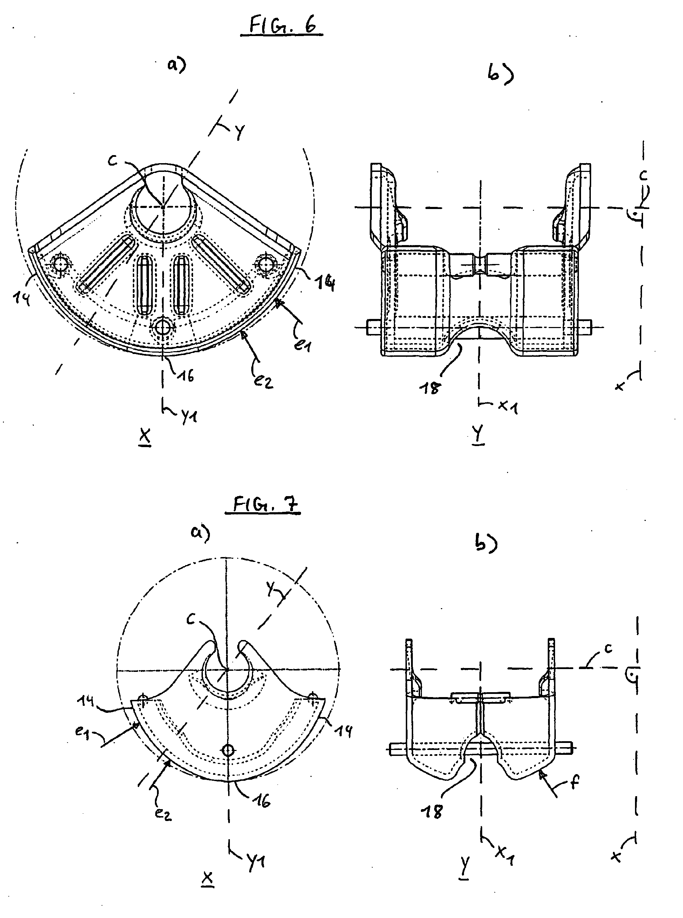

Die Abrollfläche 12 des Ausgleichselements 4 ist entlang einer Schwenkebene x gekrümmt ausgebildet (vgl. Fig. 6a und 7a). Die Schwenkebene x ist hierbei im Wesentlichen senkrecht zur Schwenkachse c angeordnet. Entsprechend ist die Schnittlinie der Abrollfläche 12 des Ausgleichselements 4 mit der Schwenkebene x gekrümmt ausgebildet. Die Krümmung ist hierbei insbesondere vorteilhafterweise rund und mit nicht konstantem Krümmungsradius gekrümmt, so dass diese nicht kreisrund ausgeführt ist. In anderen Worten ist der Krümmungsradius e der Abrollfläche 12 des Ausgleichselements 4 entlang der Schwenkebene x insbesondere derart, dass dieser von den Randbereichen 14 zu dem Mittelbereich 16 der Abrollfläche 12 abnimmt. Hierbei ist es besonderes wünschenswert, wenn die Abrollfläche 12 des Ausgleichselements 4 entlang der Schwenkebene x zu einer im Wesentlichen durch den Mittelbereich 16 der Abrollfläche 12 verlaufenden Radialebene y1 im Wesentlichen spiegelsymmetrisch ist. In den dargestellten Ausführungsformen des erfindungsgemäßen Stützfußes ist die Abrollfläche 12 des Ausgleichselements 4 entlang der Schwenkebene x derart gekrümmt, dass die Abrollfläche 12 des Ausgleichselements 4 entlang der Schwenkebene x zumindest bereichsweise mit einem nicht konstanten Krümmungsradius e gekrümmt ist. Hierbei weist die Abrollfläche 12 des Ausgleichselements 4 entlang der Schwenkebene x einen von zumindest einem der Randbereiche 14 der Abrollfläche 12 zu deren Mittelbereich 16 kleiner werdenden Krümmungsradium e auf, so dass e1 > e2. Infolgedessen weist die Abrollfläche 12 des Ausgleichselements 4 entlang einer Schwenkebene x in zumindest einem der Randbereiche 14 einen kleineren Abstand zur Schwenkachse c auf als in deren Mittelbereich 16.

In der in Fig. 1, 2 und 6 dargestellten Ausführungsform ist die Abrollfläche 12 des Ausgleichselements 4 zumindest teilweise als Ausschnitt einer Zylindermantelfläche ausgebildet. In einer alternativen Ausführungsform, die in Fig. 3, 4, 5 und 7 dargestellt ist, ist die Abrollfläche 12 des Ausgleichselements 4 entlang einer Radialebene y gekrümmt ausgebildet. In anderen Worten ist die Schnittlinie der Abrollfläche 12 des Ausgleichselements 4 mit der Radialebene y gekrümmt ausgebildet. Entsprechend der Krümmung der Abrollfläche 12 des Ausgleichselements 4 ist der Abrollbereich 8 des Fußelements 2 in dieser Ausführungsform derart ausgebildet, dass dieser ebenfalls eine gekrümmte Oberflächenkonfiguration aufweist. Besonders vorteilhaft ist hierbei, wenn die gekrümmte Oberflächenkonfiguration des Abrollbereichs 8 des Fußelements 2 zumindest teilweise im Wesentlichen kongruent zur Krümmung der Abrollfläche 12 des Ausgleichselements 4 entlang der Radialebene y ausgebildet ist, wie dies in Fig. 5 dargestellt ist. Hierdurch wird - ähnlich wie bei der Ausbildung der Abrollfläche als Ausschnitt einer Zylindermantelfläche, die auf einem ebenen bzw. planen Abrollbereich 8 abrollt - ein Linienkontakt bzw. eine Linienberührung von Ausgleichselement 4 (bzw. dessen Abrollfläche 12) und Fußelement 2 bzw. dessen Abrollbereich 8 gewährleistet, so dass Kräfte optimal übertragen werden können.

Wie insbesondere Fig. 7b zeigt, ist die Abrollfläche 12 des Ausgleichselements 4 entlang einer Radialebene y1, y2... mit konstantem Krümmungsradius f vorteilhafterweise gekrümmt, so dass ein Winkelversatz zwischen Ausgleichselement 4 und Fußelement 2 in Querrichtung möglich ist. Darüber hinaus ist es besonders zweckmäßig, wenn die Abrollfläche 12 des Ausgleichselements 4 entlang einer Radialebene y zu einer im Wesentlichen mittig angeordneten Mittelebene x1 im Wesentlichen spiegelsymmetrisch ist. Die Mittelebene x1 ist hierbei eine bestimmt positionierte Schwenkebene x, nämlich in Richtung der Schwenkachse c gesehen in der Mitte des Ausgleichselements 4.

Die Abrollfläche 12 des Ausgleichselements 4 weist zweckmäßigerweise einen Rücksprung 18 auf, der sich umfänglich über zumindest einen Teil der Abrollfläche 12 erstreckt. Dieser kann sich insbesondere entlang der Mittelebene x1 erstrecken und dient vorteilhafterweise der Aufnahme einer aus zwei Federn 20 ausgebildeten Vorspanneinrichtung, die ausgelegt ist, das Ausgleichselement 4 in Bezug auf das Fußelement 2 in die erste Position vorzuspannen.

Die Federn 20 sind hierbei als Schraubenfedern ausgebildet, wobei deren erstes Ende lösbar mit dem Auflagebereich 6 des Fußelements 2 und deren zweites Ende lösbar mit einem Montagemittel vorzugsweise an den Randbereichen 14 des Ausgleichselements 4 befestigt ist.

Schließlich weist das Fußelement 2 vorteilhafterweise zwei Führungsbereiche 10 auf, in welchen jeweils eine Führungsaussparung 22 vorgesehen ist, um Eingriffsmittel 24 des Ausgleichselements 4 zu führen. Die Führungsaussparung 22 weist insbesondere eine V-förmige Konfiguration auf, wobei deren die Spitze des V's bildender Bereich dem Auflagebereich 6 am nahesten ist und in der ersten Position des Ausgleichselements 4 vertikal unter der Schwenkachse c zu liegen kommt.

### Bezugszeichenliste

- 2: Fußelement
- 4: Ausgleichselement
- 6: Auflagebereich
- 8: Abrollbereich
- 10: Führungsbereich
- 12: Abrollfläche
- 14: Randbereich
- 16: Mittelbereich
- 18: Rücksprung
- 20: Feder
- 22: Führungsaussparung
- 24: Eingriffsmittel
- 50: Stützelement
- a: Längsachse
- b: Querachse
- c: Schwenkachse
- e: Krümmungsradius
- f: Krümmungsradius
- x: Schwenkebene
- y: Radialebene

## Patentansprüche

1. Stützfuß für eine Teleskop-Stützvorrichtung von Fahrzeugen, wie Sattelanhängern, umfassend
ein Fußelement (2) mit einem Auflagebereich (6) zur Auflage auf einem Untergrund und ein Ausgleichselement (4) zur Aufnahme eines Stützelements (50) und zum Ausgleich eines Positionsversatzes desselben, indem das Ausgleichselement (4) in Bezug auf das Fußelement (2) zwischen einer ersten und einer zweiten Position verlagerbar ist,
wobei das Ausgleichselement über eine Schwenkachse (c) schwenkbar gelagert ist und auf einem Abrollbereich (8) des Fußelements (2) abrollbar ist, und wobei eine Abrollfläche (12) des Ausgleichselements (4) entlang einer Schwenkebene (x) gekrümmt ist, **dadurch gekennzeichnet ist, dass**
die Abrollfläche (12) des Ausgleichselements (4) entlang der Schwenkebene (x) zumindest bereichsweise mit einem nicht konstanten Krümmungsradius (e) gekrümmt ist.

2. Stützfuß nach Anspruch 1, wobei die Abrollfläche (12) des Ausgleichselements (4) entlang der Schwenkebene (x) in zumindest einem Randbereich (14) der Abrollfläche (12) einen kleineren Abstand zur Schwenkachse (c) aufweist als in deren Mittelbereich (16).

3. Stützfuß nach einem der vorhergehenden Ansprüche, wobei die Abrollfläche (12) des Ausgleichselements (4) entlang der Schwenkebene (x) einen von zumindest einem Randbereich (14) der Abrollfläche (12) zu deren Mittelbereich (16) kleiner werdenden Krümmungsradius (e) aufweist.

4. Stützfuß nach einem der vorhergehenden Ansprüche, wobei die Verringerung des Krümmungsradius (e) der Abrollfläche (12) des Ausgleichselements (4) entlang der Schwenkebene (x) zumindest von einem Randbereich (14) der Abrollfläche (12) zu deren Mittelbereich (16) hin konstant ist.

5. Stützfuß nach einem der Ansprüche 1-3, wobei die Verringerung des Krümmungsradius (e) der Abrollfläche (12) des Ausgleichselements (4) entlang der Schwenkebene (x) zumindest von einem Randbereich (14) der Abrollfläche (12) zu deren Mittelbereich (16) hin zunehmend oder abnehmend ist.

6. Stützfuß nach einem der vorhergehenden Ansprüche, wobei die Abrollfläche (12) des Ausgleichselements (4) entlang der Schwenkebene (x) zu einer im Wesentlichen durch die Mitte der Abrollfläche (12) laufenden Radialebene (y1) im Wesentlichen spiegelsymmetrisch ist.

7. Stützfuß nach einem der vorhergehenden Ansprüche, wobei die Abrollfläche (12) des Ausgleichselements (4) zumindest teilweise als Ausschnitt einer Zylindermantelfläche ausgebildet ist.

8. Stützfuß nach einem der Ansprüche 1-6, wobei die Abrollfläche (12) des Ausgleichselements (4) entlang einer Radialebene (y) gekrümmt ist, und wobei der Abrollbereich (8) eine gekrümmte Oberflächenkonfiguration aufweist, welche vorzugsweise zumindest teilweise im Wesentlichen kongruent zur Krümmung der Abrollfläche (12) des Ausgleichselements (4) entlang einer Radialebene (y) ist.

9. Stützfuß nach Anspruch 8, wobei die Abrollfläche (12) des Ausgleichselements (4) entlang einer Radialebene (y) mit konstantem Krümmungsradius (f) gekrümmt ist.

10. Stützfuß nach einem der vorhergehenden Ansprüche, wobei die Abrollfläche (12) des Ausgleichselements (4) zumindest bereichsweise einen Rücksprung (18) aufweist.

11. Stützfuß nach einem der vorhergehenden Ansprüche, weiterhin aufweisend eine Vorspanneinrichtung, um das Ausgleichselement (4) in Bezug auf das Fußelement (2) in die erste Position vorzuspannen.

12. Stützfuß nach Anspruch 11, wobei die Vorspanneinrichtung aus zumindest einer Feder (20) ausgebildet ist, welche zwischen dem Fußelement (2) und dem Ausgleichselement (4) verspannt ist.

13. Stützfuß nach einem der vorhergehenden Ansprüche, wobei das Fußelement (2) zumindest einen Führungsbereich (10) aufweist, der als sich vom Auflagebereich (6) vorzugsweise im Wesentlichen senkrecht erstreckender Wandbereich ausgebildet ist.

14. Stützfuß nach Anspruch 13, wobei der Führungsbereich (10) zumindest einen Führungsrücksprung oder eine Führungsaussparung (22) aufweist, um Eingriffsmittel (24) des Ausgleichselements (4) zu führen.

15. Stützfuß nach Anspruch 14, wobei der Führungsrücksprung oder die Führungsaussparung (22) eine gekrümmte Konfiguration aufweisen und wobei dessen bzw. deren mittlerer Bereich dem Auflagebereich (6) am nahesten ist.

## Claims

1. A support base for a telescope support device of vehicles, such as semitrailers, comprising
a base element (2) having a resting area (6) for resting on a ground and a compensating element (4) for accommodating a support element (50) and for compensating a position offset of the same as the compensating element (4) is movable relative to the base element (2) between a first and a second position,
wherein the compensating element is supported swiveling around a swivel axis (c) and can be rolled on a rolling area (8) of the base element (2), and wherein
a rolling surface (12) of the compensating element (4) is curved along a swivel plane (x), **characterized in that**
the rolling surface (12) of the compensating element (4) along the swivel plane (x) at least in certain regions is curved by a non-constant radius of curvature (e).

2. The support base according to claim 1, wherein the rolling surface (12) of the compensating element (4) along the swivel plane (x) at least in an edge region (14) of the rolling surface (12) has a smaller distance to the swivel axis (c) than in the middle region (16) thereof.

3. The support base according to any one of the preceding claims, wherein the rolling surface (12) of the compensating element (4) along the swivel plane (x) has a radius of curvature (e) decreasing at least from an edge region (14) of the rolling surface (12) to the middle region (16) thereof.

4. The support base according to any one of the preceding claims, wherein the decrease in the radius of curvature (e) of the rolling surface (12) of the compensating element (4) along the swivel plane (x) is constant at least from an edge region (14) of the rolling surface (12) to the middle region (16) thereof.

5. The support base according to any one of claims 1-3, wherein the decrease in the radius of curvature (e) of the rolling surface (12) of the compensating element (4) along the swivel plane (x) is increasing or decreasing at least from an edge region (14) of the rolling surface (12) to the middle region (16) thereof.

6. The support base according to any one of the preceding claims, wherein the rolling surface (12) of the compensating element (4) along the swivel plane (x) is essentially mirror symmetric to a radial plane (y1) running essentially through the middle of the rolling surface (12).

7. The support base according to any one of the preceding claims, wherein the rolling surface (12) of the compensating element (4) is designed at least partially as a section of a cylinder outer surface.

8. The support base according to any one of claims 1-6, wherein the rolling surface (12) of the compensating element (4) is curved along a radial plane (y), and wherein the rolling area (8) has a curved surface configuration, which preferably at least partially is essentially congruent to the curvature of the rolling surface (12) of the compensating element (4) along a radial plane (y).

9. The support base according to claim 8, wherein the rolling surface (12) of the compensating element (4) is curved along a radial plane (y) by a constant radius of curvature (f).

10. The support base according to any one of the preceding claims, wherein the rolling surface (12) of the compensating element (4) at least in a certain region has a recess (18).

11. The support base according to any one of the preceding claims, further comprising a pre-tensioning device for pre-tensioning the compensating element (4) in the first position relative to the base element (2).

12. The support base according to claim 11, wherein the pre-tensioning device comprises at least a spring (20) braced between the base element (2) and the compensating element (4).

13. The support base according to any one of the preceding claims, wherein the base element (2) comprises at least a guiding area (10) which is designed as a wall area extending preferably essentially perpendicularly from the resting area (6).

14. The support base according to claim 13, wherein the guiding area (10) comprises at least a guiding recess or a guiding notch (22) for guiding engaging means (24) of the compensating element (4).

15. The support base according to claim 14, wherein the guiding recess or the guiding notch (22) has a curved configuration, and wherein the middle area thereof is closest to the resting area (6).

## Revendications

1. Pied de soutien pour un dispositif de soutien télescopique de véhicules automobiles, comme des remorques de semi-remorques, comprenant
un élément de pied (2) avec une zone d'appui (4) destinée à venir s'appuyer sur un sous-sol, et un élément de compensation (4) pour recevoir l'élément de soutien (50) et pour compenser un décalage de position de celui-ci, en ce que l'élément de compensation (4) est déplaçable par rapport à l'élément de pied (2) entre une première et une seconde position,
dans lequel l'élément de compensation est monté pivotant via un axe de pivotement (c), et est capable de rouler sur une zone de roulement (8) de l'élément de pied (2), et dans lequel une surface de roulement (12) de l'élément de compensation (4) est incurvée le long d'un plan de pivotement (x), **caractérisé en ce que**
la surface de roulement (12) de l'élément de compensation (4) est incurvée le long du plan de pivotement (x) au moins localement avec un rayon de courbure (e) non constant.

2. Pied de soutien selon la revendication 1, dans lequel la surface de roulement (12) de l'élément de compensation (4) présente le long du plan de pivotement (x) dans au moins une zone de bordure (14) de la surface de roulement (12) une distance plus petite par rapport à l'axe de pivotement (c) que dans sa zone médiane (16).

3. Pied de soutien selon l'une des revendications précédentes, dans lequel la surface de roulement (12) de l'élément de compensation (4) présente le long du plan de pivotement (x) un rayon de courbure (e) qui se réduit depuis au moins une zone de bordure (14) de la surface de roulement (12) vers sa zone médiane (16).

4. Pied de soutien selon l'une des revendications précédentes, dans lequel la réduction du rayon de courbure (e) de la surface de roulement (12) de l'élément de compensation (4) le long du plan de pivotement (x) est constante au moins depuis une zone de bordure (14) de la surface de roulement (12) en direction de sa zone médiane (16).

5. Pied de soutien selon l'une des revendications 1 à 3, dans lequel la réduction du rayon de courbure (e) de la surface de roulement (12) de l'élément de compensation (4) le long du plan de pivotement (x) est en augmentation ou en diminution au moins depuis une zone de bordure (14) de la surface de roulement (12) en direction de sa zone médiane (16).

6. Pied de soutien selon l'une des revendications précédentes, dans lequel la surface de roulement (12) de l'élément de compensation (4) le long du plan de pivotement (x) est sensiblement symétrique par rapport à un plan radial (y1) qui passe sensiblement par le milieu de la surface de roulement (12).

7. Pied de soutien selon l'une des revendications précédentes, dans lequel la surface de roulement (12) de l'élément de compensation (4) est au moins partiellement réalisée sous forme de tronçon d'une surface enveloppe cylindrique.

8. Pied de soutien selon l'une des revendications 1 à 6, dans lequel la surface de roulement (12) de l'élément de compensation (4) est incurvée le long d'un plan radial (y), et dans lequel la zone de roulement (8) présente une configuration de surface incurvée, laquelle est de préférence au moins partiellement sensiblement congruente avec la courbure de la surface de roulement (12) de l'élément de compensation (4) le long d'un plan radial (y).

9. Pied de soutien selon la revendication 8, dans lequel la surface de roulement (12) de l'élément de compensation (4) le long d'un plan radial (y) est incurvée avec un rayon de courbure constant (f).

10. Pied de soutien selon l'une des revendications précédentes, dans lequel la surface de roulement (12) de l'élément de compensation (4) comprend au moins localement un ressaut (18).

11. Pied de soutien selon l'une des revendications précédentes, comprenant en outre un moyen de précontrainte, afin de précontraindre l'élément de compensation (4) dans la première position par référence à l'élément de pied (2).

12. Pied de soutien selon la revendication 11, dans lequel le moyen de précontrainte est réalisé par au moins un ressort (20) qui est bandé entre l'élément de pied (2) et l'élément de compensation (4).

13. Pied de soutien selon l'une des revendications précédentes, dans lequel l'élément de pied (2) comprend au moins une zone de guidage (10), laquelle est réalisée sous la forme d'une zone de paroi qui s'étend de préférence sensiblement perpendiculairement à la zone d'appui (6).

14. Pied de soutien selon la revendication 13, dans lequel la zone de guidage (10) comprend au moins un ressaut de guidage ou une échancrure de guidage (22), afin de guider des moyens d'engagement (24) de l'élément de compensation (4).

15. Pied de soutien selon la revendication 14, dans lequel le ressaut de guidage ou l'échancrure de guidage (22) présente une configuration incurvée, et sa zone médiane est la plus rapprochée de la zone d'appui (6).
